# EUROPEAN PATENT APPLICATION

(11) **EP 2 749 525 A1**
(43) Date of publication of application: **02.07.2014**
(21) Application number: 13193916.7
(22) Date of filing: 21.11.2013
(51) Int. Cl.: B67D 7/02, B62B 3/10, B67D 7/78, B67D 7/84

(54) **Apparatus for supplying pollution-preventing additive liquids for diesel-engine vehicles**

(30) Priority: 28.12.2012 IT VR20120252
(71) Applicant: PIUSI S.p.A., 46029 Suzzara (MN) (IT)
(72) Inventor: Varini, Otto, 46029 Suzzara MN (IT)
(74) Representative: Modiano, Micaela Nadia

(57) **Abstract**

An apparatus for supplying pollution-preventing additive liquids for diesel-engine vehicles, which comprises a transportable main tank (2), which contains the additive liquid to be dispensed, and an auxiliary tank (3), which has a smaller volume than the main tank (2); the auxiliary tank (3) being connectible to the main tank (2) by way of the interposition of means (4) for transferring the additive liquid contained in the main tank (2) into the auxiliary tank (3); the auxiliary tank (3) being connected to means (5) for detachable connection to an inlet (100) of a tank of additive liquid (101) that is arranged on board a diesel-engine vehicle (102) in order to allow the dispensing of the content of the auxiliary tank (3) into the additive liquid tank (101).

## Description

The present invention relates to an apparatus for supplying pollution-preventing additive liquids for diesel-engine vehicles.

As is known, the use of additive liquids is currently increasing which are used in selective catalytic reduction in order to abate nitrogen oxides in exhaust fumes, so as to make it possible to comply with the EURO 6 anti-pollution regulations for diesel engines.

In order to allow the use of such additive liquids, vehicles are provided with an adapted additional tank on board and with a corresponding system for injecting the additive liquid into the diesel engine.

In particular, a pollution-preventing additive liquid of this type is known under the AdBlue^{®} trademark, owned by VDA Verband der Automobilindustrie e.V, a German association of car makers, or as AUS32, and this liquid is constituted by an aqueous solution of urea.

At present, supplying this additive liquid is achieved by way of apparatuses that are provided with a fixed tank, of a high capacity, normally comprised between 1000 and 5000 liters, which contains the additive liquid to be dispensed, and are provided with dispensing pumps, which draw the additive liquid from the fixed tank and make it possible, by way of adapted tubes, which are provided with manual valves or nozzles, to pour it into the additional tank placed on board the vehicle in order to contain the additive liquid.

The drawback of these apparatuses is constituted by high space occupation, and hence they are usually installed in fuel filling stations, for supplying trucks or other vehicles of considerable size.

Alternatively, especially for vehicles like automobiles, the supply of additive liquids, such as AdBlue^{®}, is usually achieved by way of small tanks, of a capacity of approximately 20 liters, which are provided with a special outlet spout that can be coupled hermetically to the inlet of the tank of the vehicle to be refueled.

These tanks are practical, but relatively costly and, furthermore, owing to the reduced volume, they tend to empty quickly, and hence it is necessary to have a large number of them in stock in order to ensure a certain continuity of supply of the additive liquid.

Also known is the use of apparatuses for supplying additive liquids which are constituted by trailer-mounted drums with associated manual pumps that make it possible to dispense the contents of the drums into the vehicle tanks.

The apparatuses of this type are convenient in that they are transportable, but they do not make it possible to easily control the volume of additive liquid that is dispensed into the adapted tank of the vehicle, thus causing a possible overflow thereof.

The aim of the present invention is to provide an apparatus for supplying pollution-preventing additive liquids for diesel-engine vehicles which is capable of providing a valid solution to the various aforementioned drawbacks of the known art.

Within this aim, an object of the invention is to provide an apparatus for supplying pollution-preventing additive liquids for diesel-engine vehicles which is of reduced encumbrance and easy to transport and which, at the same time, makes it possible for the user to have an adequate reserve of liquid for several supply cycles.

Another object of the invention is to provide an apparatus for supplying pollution-preventing additive liquids for diesel-engine vehicles which makes the quantity of additive liquid necessary in each instance, for the appropriate supply of the vehicle, always available and easily controllable.

Another object of the invention is to provide an apparatus for supplying pollution-preventing additive liquids for diesel-engine vehicles which is extremely reliable and safe to use, so as to prevent the dispersion of the additive liquid into the environment.

Another object of the invention is to provide an apparatus for supplying pollution-preventing additive liquids for diesel-engine vehicles which is very simple in structure and practical and easy to use.

Another object of the present invention is to provide an apparatus for supplying pollution-preventing additive liquids for diesel-engine vehicles that can be provided using elements and materials that are readily available on the market, and which, moreover, is competitive from a purely economic viewpoint as well.

This aim and these and other objects which will become more apparent hereinafter are all achieved by an apparatus for supplying pollution-preventing additive liquids for diesel-engine vehicles, according to the invention, as defined in claim 1.

Further characteristics and advantages of the invention will become more apparent from the description of a preferred, but not exclusive, embodiment thereof, which is illustrated by way of non-limiting example in the accompanying drawings wherein:
Figure 1 is a perspective view of the apparatus according to the invention;
Figure 2 is a perspective view of the apparatus according to the invention from a different angle;

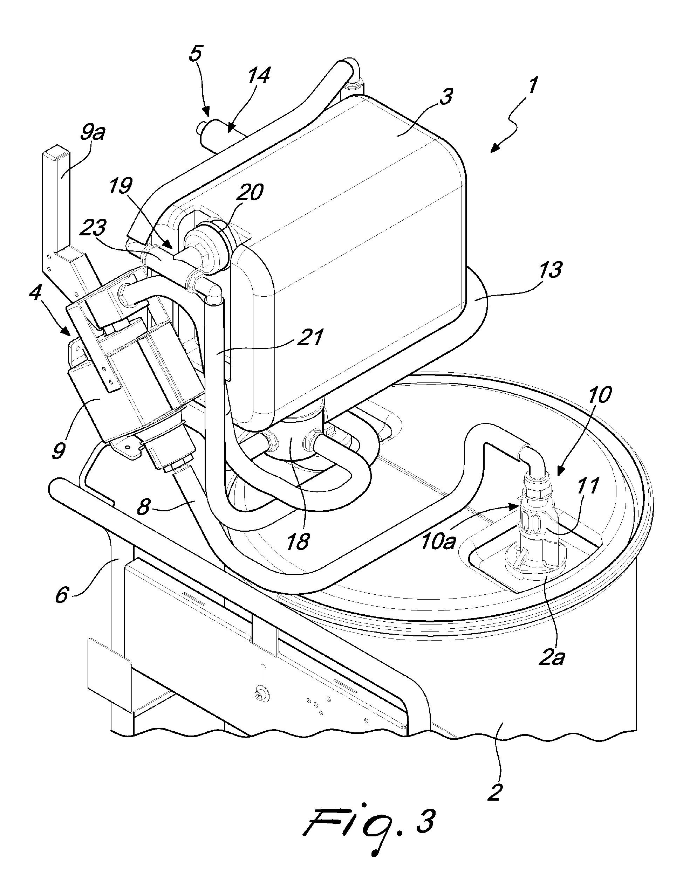

Figure 3 is a perspective view of a portion of the apparatus according to the invention, with a containment housing omitted in order to show the interior;

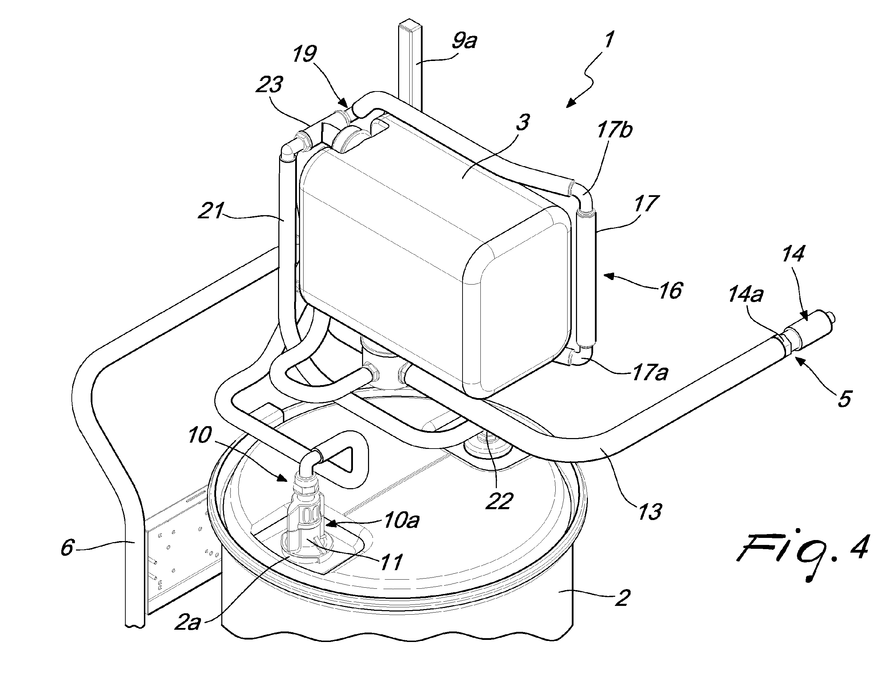

Figure 4 is another partial and perspective view of the machine according to the invention, again with the containment housing omitted;
Figure 5 is a schematic view of the apparatus according to the invention;

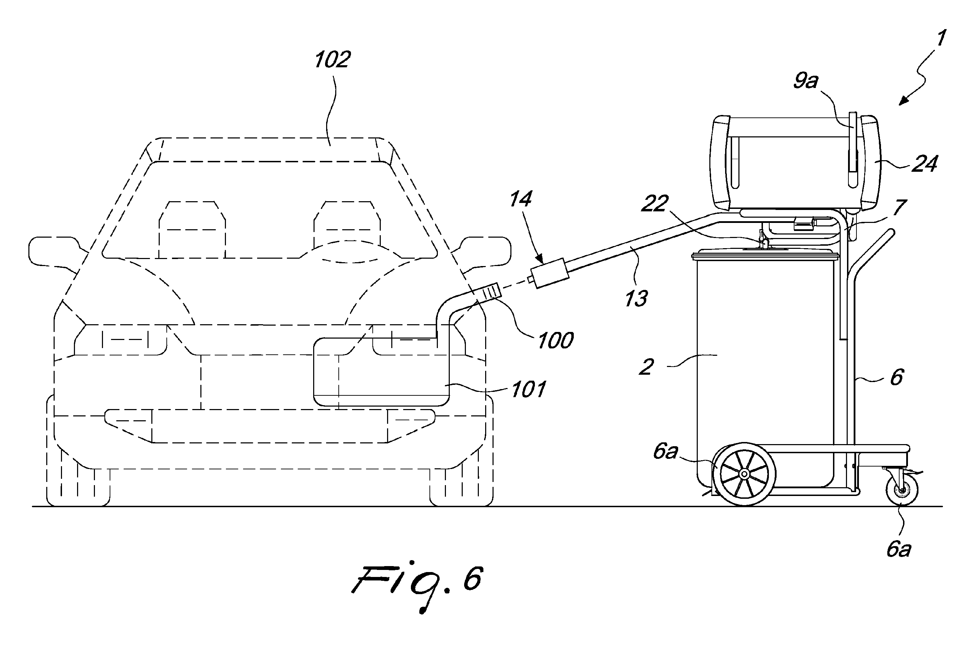

Figure 6 is a schematic diagram of how the apparatus according to the invention is used.

With reference to the figures, the apparatus for supplying pollution-preventing additive liquids for diesel-engine vehicles, according to the invention, generally indicated with the reference numeral 1, comprises a transportable main tank 2, which is designed to contain an additive liquid to be dispensed, such as, for example, the additive liquid known under the AdBlue^{®} trademark.

The apparatus according to the invention is, likewise, provided with an auxiliary tank 3 of a smaller volume than that of the main tank 2.

By way of example, the main tank 2 can have a capacity of approximately 200 liters, while the auxiliary tank 3 has, preferably, but not necessarily, a capacity of approximately 20 liters.

In particular, the auxiliary tank 3 is connectible to the main tank 2 by way of the interposition of means 4 for transferring the contents of the main tank 2 into the auxiliary tank 3. The function of such transfer means 4 is to enable the user to transfer a desired quantity of additive liquid from the main tank 2 into the auxiliary tank 3.

Also according to the invention, the auxiliary tank 3 is connected to means 5 for detachable connection to an inlet 100 of a tank for additive liquid 101 that is arranged on board a diesel-engine vehicle 102, in order to allow the dispensing of the additive liquid contained in the auxiliary tank 3 into the additive liquid tank 101 of the same vehicle.

Advantageously, the apparatus according to the invention is provided so as to form, with the main tank 2 and the auxiliary tank 3, a closed circuit, perfectly hermetically sealed, so as not to allow contamination of the additive liquid.

As illustrated, the main tank 2 is mounted on a frame 6 provided with wheels 6a, which is conveniently in the form of a trolley.

More specifically, according to the embodiment illustrated in the figures, the frame 6 has, in a downward region, a flat base 6b, on which the main tank 2 rests, and, at the rear, a handle 6c, which is arranged above the flat base 6b.

Advantageously, the auxiliary tank 3 is integrally associated with the main tank 3. More specifically, with reference to the embodiment shown, the auxiliary tank 3 is arranged above the main tank 3 and is, conveniently, supported by a bracket element 7 which is fixed to the frame 6 on which the main tank 2 is mounted.

Preferably, the auxiliary tank 3 is arranged at a higher level than the inlet 100 of the additive liquid tank 101 of the vehicle 102 to be supplied, in order to allow the dispensing by gravity of the additive liquid from the auxiliary tank 3 to the inlet 100, through the detachable connection means 5, with a preset capacity.

Advantageously, the above-mentioned transfer means 4 are provided by a connecting duct 8, which is constituted, for example, by a flexible tube, connected, at one end, with the main tank 2 and, at the other end, with the auxiliary tank 3, and by a pump 9, interposed along the connecting duct 8, which can be of the manually actuated type, and which in such case will be provided with an adapted actuation lever 9a, as in the embodiment shown, or, alternatively, of the electrically actuated type or of still another type.

Conveniently, the connecting duct 8 is provided with detachable means for quick hermetic coupling 10 to the main tank 2, which comprise, advantageously, a first coupling element 10a, which is fixed at one end of the connecting duct 8, and a second coupling element 10b, which is integral with the main tank 2 and which can be coupled hermetically with the first coupling element 10a.

More precisely, the first coupling element 10a is constituted by an intake connector 11, which is conventional and advantageously provided with a hose-end fitting, and which enables the user to execute a quick fastening to the second coupling element 10b with the certainty of maintaining the main tank 2 completely isolated from the outside, in order to prevent both the possible dispersion of the additive liquid into the environment and the possible contamination of the additive liquid by external polluting agents.

Conveniently, the second coupling element 10b has, in turn, an engagement head, which is conventional and shaped complementary to the intake connector 11, and which can be mounted, by way of a threaded coupling, in an access hole 2a, provided in the top part of the main tank 2, after removal of an adapted sealing cap.

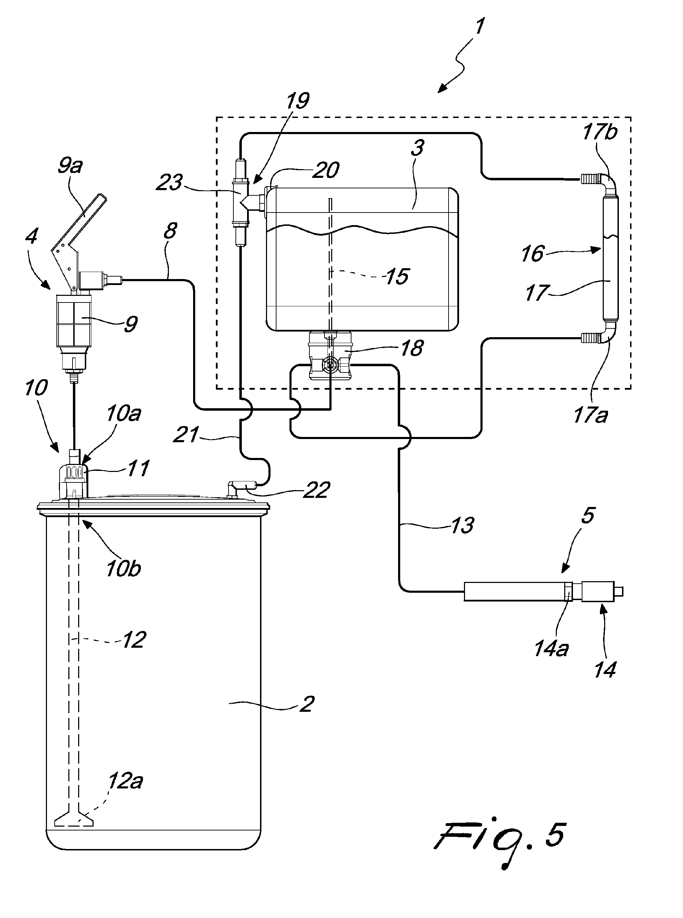

As illustrated in Figure 5, the engagement head is, advantageously, connected to a suction tube 12, which is immersed in the main tank 2, so as to be able to draw the additive liquid from the bottom of the main tank 2 through an enlarged mouth 12a.

Detachable means for quick hermetic coupling 10 of the type described above are, for example, sold by the Applicant under the "connection SEC" name.

According to the embodiment shown, the above-mentioned detachable connection means 5 comprise a dispensing duct 13 which is connected, at one end, to the auxiliary tank 3 and is provided, at its other end, with a dispensing valve 14 that is detachably coupled hermetically to the inlet 100 of the additive liquid tank 101 of the vehicle 102.

Such dispensing valve 14 is structured so as to be able to dispense the additive liquid contained in the auxiliary tank 3 into the additive liquid tank 101 of the vehicle 102 only after it has been coupled to the inlet 100.

In particular, according to its preferred embodiment, the dispensing valve 14 is, conveniently, provided with a ferrule 14a that can be screwed onto all inlets of standard shape and is adapted to actuate the opening of the dispensing valve 14 only after it has been screwed onto the inlet 100 of the additive liquid tank of the vehicle, thus allowing the dispensing of the additive liquid originating from the auxiliary tank 3, for as long as the user keeps it pressed against the inlet 100.

The dispensing valve 14 is, furthermore, structured so that, once dispensing has ended, after filling the additive liquid tank 101 of the vehicle 102 or after emptying the auxiliary tank 3, it is sufficient to release the ferrule 14a and unscrew it from the inlet 100 of the additive liquid tank 101 of the vehicle 102, in order to achieve the automatic closing of the dispensing valve 14, so as to prevent the dripping of the additive liquid.

Valves for dispensing 14 with the characteristics described above are currently sold by Kruse GmbH & Co. KG - GB Automotive.

Alternatively, the valve made by WV-Audi or a newly-designed valve can also be used as the dispensing valve 14.

Advantageously, inside the dispensing duct 13 there is a duct 15 for discharging the air contained in the additive liquid tank 101 of the vehicle 102, which leads into the auxiliary tank 3.

Advantageously, the apparatus according to the invention is, furthermore, provided with means of controlling the quantity of additive liquid dispensed into the additive liquid tank 101 of the vehicle 102. Such control means comprise, for example, means 16 of indicating the level of additive liquid contained in the auxiliary tank 3.

As in the embodiment shown, the indicator means 16 can be provided by way of a transparent tube 17, arranged substantially vertically, that has a lower end 17a, connected to the bottom of the auxiliary tank 3, and an upper end 17b, connected to the top part of the auxiliary tank 3. The transparent tube 17 is, furthermore, provided, advantageously, with a graduated scale, which enables the user to easily check the level of the additive liquid contained in the auxiliary tank 3 and visually monitor the quantity of additive liquid that is poured from the auxiliary tank 2 into the additive liquid tank 101 of the vehicle 102.

It should be noted that on the bottom of the auxiliary tank 3 there can be a multi-way connector 18 that connects the inside of the auxiliary tank 3 with the dispensing duct 13 and with the lower end of the transparent tube 17.

More precisely, the multi-way connector 18 can also be connected to the delivery of the pump 9 via the portion of the connecting duct 8 that originates from it.

Alternatively, the means of controlling the quantity of additive liquid dispensed into the additive liquid tank 101 of the vehicle 102 can also be provided by way of conventional devices of the mechanical or electronic type, such as flow meters or the like, which can be interposed, for example, along the dispensing duct 13.

Conveniently, the auxiliary tank 3 is associated with an overfilling prevention device 19, which makes it possible to return to the main tank 2 any excess additive liquid that has been accidentally pumped into the auxiliary tank 3. The overfilling prevention device 19 can be, for example, implemented by providing, in the upper part of the auxiliary tank 3, an opening 20 for the passage of the additive liquid, which is connected, by means of a return duct 21, to a connecting opening 22 which is defined in the main tank 2 and is previously closed with a corresponding sealing cap which must be removed before making the connection with the return duct 21.

Conveniently, at the above-mentioned passage opening 20, there is a T-shaped connector 23 connecting the passage opening 20 with the return duct 21 and with the upper end 17b of the transparent tube 17.

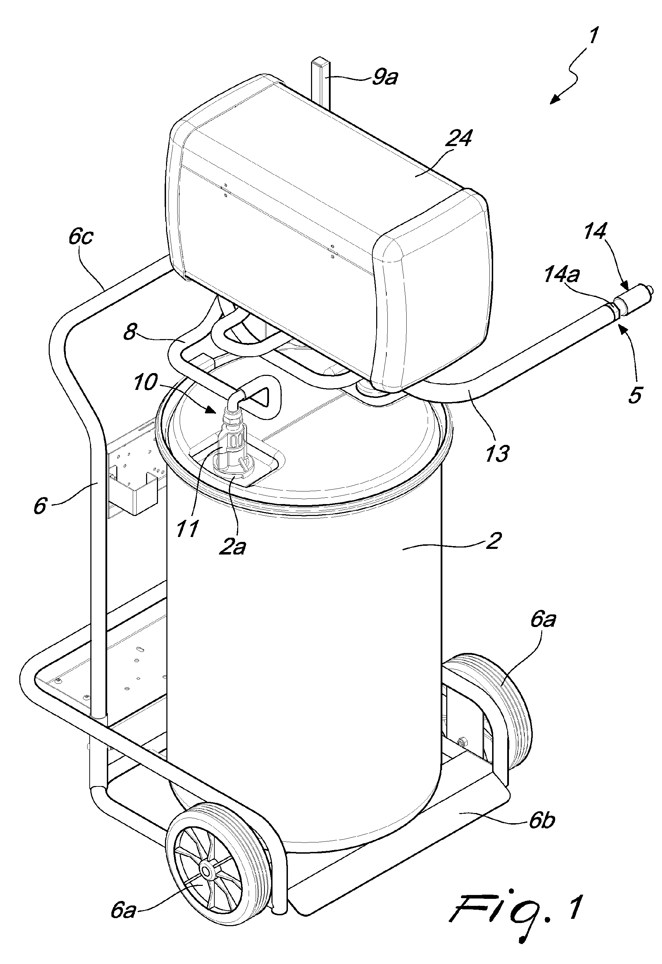

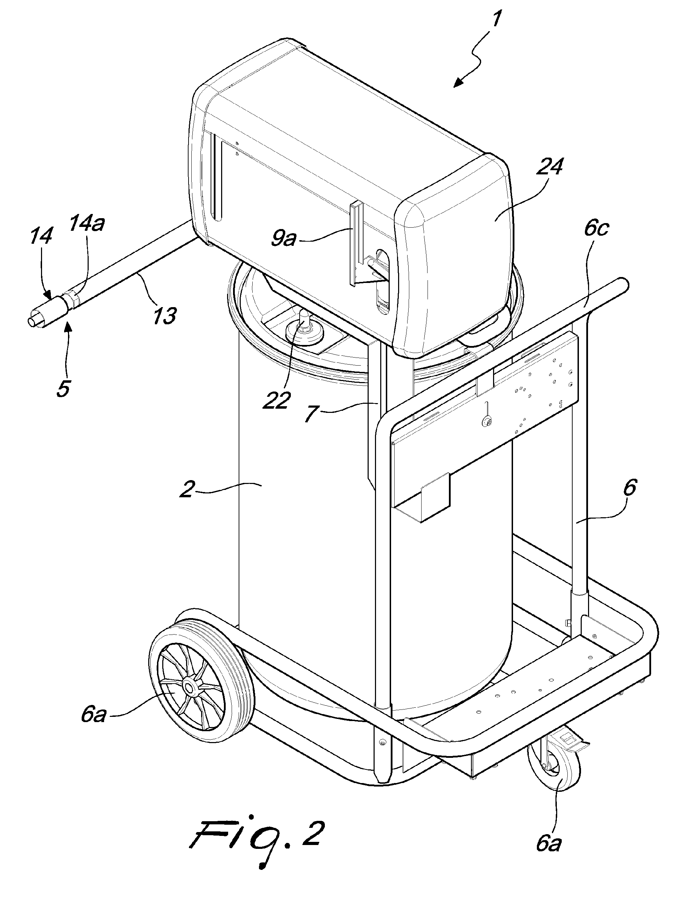

It should be noted that the auxiliary tank 3, and the body of the pump 9, can, optionally, be enclosed in a containment housing 24, as shown in Figures 1 and 2.

The operation of the apparatus according to the invention is as follows.

Once the main tank 2 has been loaded on the frame 6, the user proceeds to remove the sealing caps from the main tank 2 and subsequently to mount, by way of screwing into the adapted access hole 2a provided in the main tank 2, the second coupling element 10b with the corresponding suction tube 12 and to couple the first coupling element 10a to the second coupling element 10b.

The user can then proceed to connect the portion of the connecting duct 8, connected from the intake of the pump 9, to the first coupling element 10a and the return duct 21 to the connecting opening 22.

Subsequently, by activating the pump 9, the user proceeds to fill, up to the desired level, the auxiliary tank 3 with the additive liquid originating from the main tank 2.

At this point, the apparatus is ready for use and is perfectly sealed, so that the additive liquid cannot be polluted or escape into the outside environment.

The dispensing of the additive liquid into the additive liquid tank 101 of the vehicle 102 is performed by the user by coupling the dispensing valve 14 to the inlet of the additive liquid tank 101, so as to achieve the automatic opening of the dispensing valve 14 and the consequent pouring by gravity of the additive liquid contained in the auxiliary tank 3 into the additive liquid tank 101 of the vehicle 102.

It should be noted that while pouring the additive liquid into the additive liquid tank 101 of the vehicle 102, the air present in the additive liquid tank 101 of the vehicle rises, through the discharge duct 15, into the auxiliary tank 3 and from there it goes subsequently into the main tank 2 by way of the return duct 21.

Once the supply of the additive liquid to the additive liquid tank 101 of the vehicle 102 is completed, the user proceeds to uncouple the dispensing valve 14 from the inlet of the additive liquid tank 101 of the vehicle, with consequent automatic closing of the dispensing valve 14, and, subsequently, to refill the auxiliary tank 3. Such operation can continue until the main tank 2 has been completely emptied, and at this point it can be replaced with a new one that is completely full of additive liquid.

In practice it has been found that the apparatus according to the invention fully achieves the set aim and objects and, in particular, attention is drawn to the fact that the apparatus is easy and immediate to use, since thanks to the presence of the auxiliary tank, it enables a certain control of the maximum quantity of additive liquid that is dispensed, in addition to being very convenient to transport.

Another advantage of the invention consists in the fact that it does not require any connection to the mains electricity supply, unless the pump is of the electrically-actuated type, or to hydraulic systems.

All the characteristics of the invention, indicated above as advantageous, convenient or similar, may also be missing or be substituted by equivalent characteristics.

The individual characteristics set out with reference to general teachings or to specific embodiments may all be present in other embodiments or may substitute characteristics in such embodiments.

The invention, thus conceived, is susceptible of numerous modifications and variations, all of which are within the scope of the appended claims.

In practice the materials employed, provided they are compatible with the specific use, and the dimensions and shapes, may be any according to requirements.

Moreover, all the details may be substituted by other, technically equivalent elements.

The disclosures in Italian Patent Application No. VR2012A000252 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for supplying pollution-preventing additive liquids for diesel-engine vehicles, **characterized in that** it comprises a transportable main tank (2), which contains the additive liquid to be dispensed, and an auxiliary tank (3), which has a smaller volume than said main tank (2), said auxiliary tank (3) being connectible to said main tank (2) by way of the interposition of means (4) for transferring the contained additive liquid of said main tank (2) into said auxiliary tank (3), said auxiliary tank (3) being connected to means (5) for detachable connection to an inlet (100) of a tank of additive liquid (101) that is arranged on board a diesel-engine vehicle (102) in order to allow the dispensing of the content of said auxiliary tank (3) into said additive liquid tank (101).

2. The apparatus according to claim 1, **characterized in that** said main tank (2) and said auxiliary tank (3) are arranged in a hermetically sealed closed circuit in order to prevent contamination of the additive liquid.

3. The apparatus according to one or more of the preceding claims, **characterized in that** said main tank (2) is mounted on a frame (6) provided with wheels (6a), said auxiliary tank (3) being associated integrally with said main tank (2).

4. The apparatus according to one or more of the preceding claims, **characterized in that** said transfer means (4) comprise a duct (8) for connection between said main tank (2) and said auxiliary tank (3) and a manually actuated pump (9) that is interposed along said connecting duct (8).

5. The apparatus according to claim 4, **characterized in that** said connecting duct (8) is provided with detachable means for quick hermetic coupling (10) to said main tank (2).

6. The apparatus according to claim 1, **characterized in that** said detachable connection means (5) comprise a dispensing duct (13) that is connected, at one end, to said auxiliary tank (3) and has, at its other end, a dispensing valve (14) that can be detachably coupled hermetically to said inlet (100) and is adapted to dispense the content of said auxiliary tank (3) into said additive liquid tank (101) of the vehicle (102) only after it has been coupled to said inlet (100).

7. The apparatus according to claim 6, **characterized in that** inside said dispensing duct (13) there is a duct (15) for discharging the air contained in said additive liquid tank (101) of the vehicle (102) which leads into said auxiliary tank (3).

8. The apparatus according to one or more of the preceding claims, **characterized in that** it comprises means for controlling the quantity of additive liquid dispensed into said additive liquid tank (101) of the vehicle (102).

9. The apparatus according to one or more of the preceding claims, **characterized in that** an overfilling prevention device (19) is associated with said auxiliary tank (3).

10. The apparatus according to one or more of the preceding claims, **characterized in that** said auxiliary tank (3) is arranged at a higher level than said inlet (100) in order to allow the dispensing by gravity of the additive liquid from said auxiliary tank (3) into said inlet (100).
